# EUROPÄISCHE PATENTSCHRIFT

(11) **EP 1 171 233 B1**
(45) Veröffentlichungstag und Bekanntmachung des Hinweises auf die Patenterteilung: **02.05.2003**
(21) Anmeldenummer: 00920539.4
(22) Anmeldetag: 22.03.2000
(51) Int. Cl.: B01J 19/00, B01L 3/02, F04B 19/00

(54) **VORRICHTUNG UND VERFAHREN ZUM AUFBRINGEN VON MIKROTRÖPFCHEN AUF EIN SUBSTRAT**
DEVICE AND METHOD FOR APPLYING MICRO-DROPLETS ON A SUBSTRATE
DISPOSITIF ET PROCEDE POUR L'APPLICATION DE MICRO-GOUTTELETTES SUR UN SUBSTRAT

(30) Priorität: 23.03.1999 DE 19913076
(43) Veröffentlichungstag der Anmeldung: 16.01.2002
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: ZENGERLE, Roland, D-78050 Villingen-Schwenningen (DE); HEY, Nicolaus, D-78664 Eschbronn-Mariazell (DE); GRUHLER, Holger, D-78609 Tuningen (DE); FREYGANG, Michael, D-78050 Villingen-Schwenningen (DE); MÜLLER, Martin, D-78661 Dietingen (DE)
(74) Vertreter: Schoppe, Fritz, Dipl.-Ing.
(86) Internationale Anmeldenummer: EP0002543
(87) Internationale Veröffentlichungsnummer: WO00056443

(56) Entgegenhaltungen:
- WO-A-97/45730
- WO-A-98/51999
- US-A- 5 508 200
- US-A- 5 551 487
- US-A- 5 847 105

## Beschreibung

Die vorliegende Erfindung bezieht sich auf eine Vorrichtung zum Aufbringen zumindest eines Mikrotröpfchens auf ein Substrat sowie auf einen Dosierkopf zur Verwendung in einer solchen Vorrichtung. Die vorliegende Erfindung bezieht sich ferner auf ein Verfahren zum Aufbringen zumindest eines Mikrotröpfchens auf ein Substrat. Insbesondere bezieht sich die vorliegende Erfindung auf solche Vorrichtungen und Verfahren, die geeignet sind, sogenannte Biochips, bei denen eine Mehrzahl unterschiedlicher Analyte auf ein Substrat aufgebracht sind, um unterschiedliche Stoffe in einer unbekannten Probe nachzuweisen, zu erzeugen.

Die zunmehmende Entschlüsselung der Genome von Menschen, Tieren und Pflanzen schafft eine Vielzahl neuer Möglichkeiten, von der Diagnose von genetisch bedingten Krankheiten bis hin zur wesentlich beschleunigten Suche nach pharmazeutisch interessanten Wirkstoffen. So werden beispielsweise die oben genannten Biochips künftig eingesetzt werden, um Lebensmittel hinsichtlich einer Vielzahl möglicher, gentechnisch veränderter Bestandteile zu untersuchen. In einem weiteren Anwendungsgebiet können derartige Biochips verwendet werden, um bei genetisch bedingten Krankheiten den genauen Gendefekt festzustellen, um daraus die ideale Strategie zur Behandlung der Krankheit abzuleiten.

Die Biochips, die für derartige Anwendungen verwendbar sind, bestehen in der Regel aus einem Trägermaterial, d.h. einem Substrat, auf welches eine Vielzahl unterschiedlicher Substanzen in Form eines Rasters, aufgebracht wird. Typische Rasterabstände in dem Array liegen zwischen 100 µm und 1.000 µm. Die Vielfalt der unterschiedlichen Substanzen, die als sogenannte Analyte bezeichnet werden, auf einem Biochip reicht je nach Anwendung von einigen wenigen unterschiedlichen Stoffen bis hin zu einigen 100.000 verschiedenen Stoffen pro Substrat. Mit jedem dieser unterschiedlichen Analyte kann ein ganz bestimmter Stoff in einer unbekannten Probe nachgewiesen werden.

Bringt man eine unbekannte Probenflüssigkeit auf einen Biochip auf, so treten bei bestimmten Analyten Reaktionen auf, die über geeignete Verfahren, beispielsweise eine Fluoreszenzerfassung detektiert werden können. Die Anzahl der unterschiedlichen Analyte auf dem Biochip entspricht dabei der Anzahl der unterschiedlichen Bestandteile in der unbekannten Probenflüssigkeit, die mit dem jeweiligen Biochip gleichzeitig analysiert werden können. Bei einem solchen Biochip handelt es sich somit um ein Diagnosewerkzeug, mit welchem eine unbekannte Probe gleichzeitig und gezielt hinsichtlich einer Vielzahl von Inhaltsstoffen untersucht werden kann.

Zum Aufbringen der Analyte auf ein Substrat, um einen solchen Biochip zu erzeugen, sind derzeit drei grundsätzlich verschiedene Verfahren bekannt. Diese verfahren werden alternativ je nach benötigter Stückzahl der Biochips bzw. nach notwendiger Analytenzahl pro Chip eingesetzt.

Das erste Verfahren wird als "Contactprinting" bezeichnet, wobei bei diesem Verfahren ein Bündel aus Stahlkapillaren verwendet wird, die im Inneren mit verschiedenen Analyten gefüllt sind. Dieses Bündel aus Stahlkapillaren wird auf das Substrat gestempelt. Beim Abheben des Bündels bleiben die Analyte in Form von Mikrotröpfchen an dem Substrat haften. Bei diesem Verfahren wird die Qualität des Druckmusters allerdings sehr stark durch die Wirkung von Kapillarkräften bestimmt und hängt dadurch von einer Vielzahl von kritischen Parametern ab, beispielsweise der Qualität und der Beschichtung der Oberfläche des Substrats, der genauen Geometrie der Düse und vor allem von den verwendeten Medien. Daneben ist das Verfahren sehr anfällig gegenüber Verunreinigungen des Substrats sowie der Düsen. Dieses eben beschriebene Verfahren eignet sich bis zu einer Analytenvielfalt von einigen 100 pro Substrat.

Bei einem zweiten Verfahren zum Erzeugen von Biochips, dem sogenannten "Spotting" werden meist sogenannte Mikrodispenser eingesetzt, die ähnlich wie Tintendrucker in der Lage sind, einzelne Mikrotröpfchen einer Flüssigkeit auf einen entsprechenden Steuerbefehl hin auf ein Substrat zu schießen. Ein solches Verfahren wird als "drop-on-demand" bezeichnet. Solche Mikrodispenser sind von einigen Firmen kommerziell erhältlich. Der Vorteil bei diesem Verfahren liegt darin, daß die Analyte berührungslos auf ein Substrat aufgebracht werden können, wobei der Einfluß von Kapillarkräften bedeutungslos ist. Ein wesentliches Problem besteht jedoch darin, daß es sehr teuer und überaus schwierig ist, eine Vielzahl von Düsen, die alle mit unterschiedlichen Medien versorgt werden, parallel, bzw. in einem Array, anzuordnen. Das limitierende Element ist hierbei die Aktorik sowie die Medienlogistik, die nicht in dem gewünschten Maße miniaturisierbar sind.

Als ein drittes Verfahren zur Herstellung von Biochips wird derzeit das sogenannte "Syntheseverfahren" verwendet, bei dem die Analyte, die in der Regel aus einer Kette aneinanderhängender Nukleinsäuren bestehen, chemisch auf dem Substrat hergestellt, also synthetisiert werden. Zur Abgrenzung der räumlichen Position der unterschiedlichen Analyte werden Verfahren verwendet, wie sie aus der Mikroelektronik bekannt sind, beispielsweise Lithographieverfahren mit Maskentechnik. Dieses Syntheseverfahren ist unter den genannten Verfahren mit Abstand das teuerste, wobei jedoch die größte Analytenvielfalt auf einem Chip herstellbar ist, in der Größenordnung von 100.000 verschiedenen Analyten pro Substrat.

Aus der JP 07116575 ist eine Ultraschall-Filmerzeugungsvorrichtung bekannt, bei der eine Membran mittels eines piezoelektrischen Schwingers angeregt wird, um durch die Schwingung der Membran eine an einer Seite der Membran anliegende Lösung zu atomisieren und den Sprühnebel auf ein Substrat zu sprühen, um einen Dünnfilm, der aus den Komponenten der Lösung besteht, zu erzeugen.

In der WO 93/10910 A1 ist eine Fluidtröpfchenerzeugungsvorrichtung beschrieben, bei der ebenfalls eine mit Öffnungen versehene Membran in Schwingungen versetzt wird, um bei den mechanischen Resonanzfrequenzen der schwingenden Anordnung ein Fluid, das an der Membran anliegt, durch die Öffnungen zu dispensieren. Alternativ ist die Membran mit Erhöhungen versehen, um ein Fluid, das auf der Seite der Erhöhungen vorliegt, in der Richtung, in der die Erhöhungen gebildet sind, zu dispensieren.

Die WO 97/01393 offenbart eine Vorrichtung zum Aufbringen eines Fluids auf eine Oberfläche, bei der ein Fluid mittels Druck durch eine hohle Nadel gedrückt wird. Um zu verhindern, daß die Nadel verstopft, wird dieselbe Längsschwingungen unterworfen.

Aus der US-A-5847105 sind Verfahren und Vorrichtungen zum Herstellen eines Substrats, auf das eine Mehrzahl von Mikrotröpfchen aufgebracht ist, bekannt. Zu diesem Zweck ist ein Mehrstrahl-Dosierkopf vorgesehen, durch den Mikrotröpfchen auf ein Substrat aufgebracht werden können. Die Position des Dosierkopfs bezüglich des Substrats ist einstellbar, um das Aufbringen von Tröpfchen an unterschiedlichen Orten zu ermöglichen. Das Aufbringen der Tröpfchen an sich erfolgt dann durch eine Druckpuls-Erzeugungseinrichtung, beispielsweise eine Piezokeramik. Die durch diese Piezokeramik erzeugten Druckpulse treiben Tröpfchen aus dem Dosierkopf, wie es auf dem Gebiet von Tintenstrahldruckern bekannt ist.

Die US-A-5508200 offenbart ein System zur Durchführung chemischer Analysen, bei dem zunächst mittels einer Dosierstation Flüssigkeitstropfen auf Testbereiche eines Trägermediums aufgebracht werden. Zu diesem Zweck wird ein piezoelektrisch betriebenes Dosierglied, bei dem unter Verwendung einer Schockwelle in einem piezoelektrischen Zylinder Tröpfchen ausstoßbar sind, verwendet.

Aus der WO-A-5508200 ist ein Verfahren zum Aufbringen von Tröpfchen auf ein Substrat bekannt, bei dem eine Flüssigkeit unter Druck einer piezoelektrisch angetriebenen Düse zugeführt wird. Ein Tropfenabriß am Auslaß der Düse wird bewirkt, indem diese durch den piezoelektrischen Antrieb hochfrequenten Schwingungen unterworfen wird.

Der vorliegenden Erfindung liegt die Aufgabe zugrunde, Vorrichtungen und Verfahren zu schaffen, die es ermöglichen, Mikrotröpfchen einzeln oder in einem regelmäßigen Muster kostengünstig und exakt auf ein Substrat aufzubringen.

Diese Aufgabe wird durch eine Vorrichtung nach Anspruch 1 sowie ein Verfahren nach Anspruch 12 gelöst.

Die vorliegende Erfindung schafft eine Vorrichtung zum Aufbringen zumindest eines Mikrotröpfchens auf ein Substrat, die einen Dosierkopf mit zumindest einer Düsenöffnung und einem Flüssigkeitsspeicherbereich aufweist. Eine Antriebseinrichtung ist vorgesehen, um den Dosierkopf mit einer solchen Beschleunigung zu beaufschlagen, daß allein dadurch, daß eine in dem Flüssigkeitspeicherbereich befindliche Flüssigkeitsmenge der Beschleunigung trägheitsbedingt nicht folgt, ein Mikrotröpfchen aus der Düsenöffnung auf das Substrat getrieben wird.

Der Dosierkopf für die erfindungsgemäße Vorrichtung besitzt einen Dosierkopfkörper, in dem die zumindest eine Düsenöffnung gebildet ist, wobei der Dosierkopfkörper ferner einen Flüssigkeitsspeicherbereich aufweist, der mit der Düsenöffnung fluidmäßig verbunden ist, derart, daß durch ein Beaufschlagen des Dosierkopfes mit einer Beschleunigung durch die Trägheit einer in dem Flüssigkeitsspeicherbereich vorliegenden Flüssigkeit ein Mikrotröpfchen aus der Düsenöffnung treibbar ist. Dabei kann der Flüssigkeitsspeicherbereich vorzugsweise durch eine Steigleitung gebildet sein, die sich in einer Richtung von der Düsenöffnung weg erstreckt, die entgegengesetzt zu der Richtung ist, in der das Mikrotröpfchen aus dem Dosierkopf treibbar ist.

Bei dem erfindungsgemäßen Verfahren zum Aufbringen zumindest eines Mikrotröpfchens auf ein Substrat wird zunächst ein mit einer Düsenöffnung fluidmäßig verbundener Flüssigkeitsspeicherbereich mit einer Flüssigkeitsmenge befüllt, wobei die Düsenöffnung und der Flüssigkeitsspeicherbereich in einem Dosierkopf gebildet sind. Nachfolgend wird der Dosierkopf mit einer solchen Beschleunigung beaufschlagt, daß allein dadurch, daß die in dem Flüssigkeitsspeicherbereich befindliche Flüssigkeitsmenge der Beschleunigung trägheitsbedingt nicht folgt, ein Mikrotröpfchen aus der Düsenöffnung getrieben wird.

Die vorliegende Erfindung schafft somit Vorrichtungen und Verfahren, mit denen Biochips kostengünstig in hohen Stückzahlen hergestellt werden können. Die Erfindung basiert dabei auf der Erkenntnis, daß durch eine mechanische Beschleunigung, mit der ein Dosierkopf durch ein externes mechanisches System beaufschlagt wird, Mikrotröpfchen aus dem Dosierkopf getrieben werden können. Bei dem externen mechanischen System, das eine Antriebseinrichtung darstellt, können beliebige geeignete Vorrichtungen verwendet werden, beispielsweise Piezo-Biegewandler, Piezo-Stapel, pneumatische Antriebe und dergleichen. Auf eine Flüssigkeit, die sich in mit der Düsenöffnung fluidmäßig verbundenen Bereichen, d.h. beispielsweise der Düse selbst, einer Medienleitung und einem Reservoir befinden wirken dabei Trägheitskräfte. Da die Flüssigkeit nicht starr mit dem Dosierkopf verbunden ist, ergibt sich infolge der Trägheitskräfte eine Beschleunigung der Flüssigkeit relativ zu dem die Flüssigkeit tragenden Dosierkopf. Die Flüssigkeit setzt sich somit relativ zu dem Dosierkopf in Bewegung. Ist diese Relativbewegung zwischen der sich in der Düse befindlichen Flüssigkeit und der Düsenöffnung groß genug, so reißt ein Mikrotropfen an der Düse ab. Die Größe dieses Tropfens ist durch die Größe und Dauer der Beschleunigung des Dosierkopfes, die Größe der Flüssigkeitsmasse, durch deren Trägheit der Ausstoß bewirkt wird, den Düsendurchmesser sowie den Strömungswiderstand der Bewegung der Flüssigkeit in dem Dosierkopf bestimmt. Die Richtung der Beschleunigung, mit der der Dosierkopf beaufschlagt wird, muß dabei so orientiert sein, daß die Flüssigkeit aufgrund ihrer Trägheit aus der Düse herausgeschleudert wird und sich nicht in Flüssigkeitsspeicherbereiche oder Medienleitungen in dem Dosierkopf zurückzieht.

Durch die vorliegende Erfindung wird vorzugsweise gleichzeitig eine Mehrzahl von Mikrotröpfchen auf ein Substrat aufgebracht, so daß kostengünstig und zuverlässig beispielsweise ein Biochip, bei dem unterschiedliche biologisch relevante Stoffe in einem regelmäßigen Muster auf ein Substrat aufgebracht sind, erzeugt werden kann. Durch die Beschleunigung des Dosierkopfes ist es möglich, aus jeder einzelnen Düse in einem Dosierkopf gleichzeitig ein Mikrotröpfchen herauszutreiben, wobei die Trägheit der Flüssigkeit genutzt wird.

Der Dosierkopf kann dabei mit unterschiedlichen Beschleunigungen beaufschlagt werden, um den Ausstoß von Flüssigkeitströpfchen zu bewirken. Eine Möglichkeit besteht darin, den Dosierkopf aus einer Position benachbart zu dem Substrat sehr stark aus seiner Ruhelage heraus zu beschleunigen, um eine Bewegung des Dosierkopfes von dem Substrat weg zu bewirken. Eine alternative Möglichkeit besteht darin, den Dosierkopf aus einer kontinuierlichen Bewegung zu dem Substrat hin heraus abrupt abzubremsen, wobei dieses Abbremsen beispielsweise durch einen mechanischen Anschlag unterstützt werden kann. Daneben ist es ebenfalls möglich, eine mechanisch genügend steife Halterung für den Dosierkopf vorzusehen, die in Bereiche der Eigenfrequenz derselben angeregt wird, derart, daß die Halterung und damit der Dosierkopf eine Halbschwingung durchführt. Die maximale Beschleunigung tritt in diesem Fall im Umkehrpunkt der Schwingung auf, so daß die Halterung und der Dosierkopf derart angeordnet werden, daß der Dosierkopf im Umkehrpunkt der Schwingung benachbart zu dem Substrat angeordnet ist.

Der erfindungsgemäße Dosierkopf kann eine oder eine Vielzahl von Düsen enthalten, wobei die Düsen in dem gleichen gegenseitigen Abstand zueinander angeordnet sind, in dem Fluidtropfen auf das Substrat aufgebracht werden sollen. Wenn die Düsen sehr nahe zueinander angeordnet sein sollen, d.h. wenn ein sehr enges Array unterschiedlicher Substanzen auf dem Substrat erzeugt werden soll, ist es vorteilhaft, daß jede Düse durch eine eigene Medienleitung mit einem größeren, außenliegenden Reservoir verbunden ist, über welches jede Düse mit einer bestimmten Flüssigkeit versorgt werden kann. Liegen die Düsen weit genug auseinander, so daß sie mit konventionellen Verfahren, beispielsweise mittels Standard-Pipettierautomaten, mit Flüssigkeit versorgt werden können, so kann auf die Medienleitungen sowie die außenliegenden Flüssigkeitsreservoire verzichtet werden. In diesem Fall kann das Flüssigkeitsreservoir direkt über der Düse angeordnet sein.

Ein solcher Dosierkopf kann nun aus einer Bewegung auf das Substrat zu unmittelbar vor dem Substrat schlagartig abgebremst werden. Die Flüssigkeit behält aufgrund ihrer Trägheit und aufgrund der Tatsache, daß sie mit dem Dosierkopf nicht starr verbunden ist, diese Bewegung bei und wird aus der Düse heraus auf das Substrat geschleudert. Alternativ kann ein unmittelbar über einem Substrat befindlicher, ruhender Dosierkopf schlagartig vom Substrat weg beschleunigt werden. Die Flüssigkeit kann nun aufgrund ihrer Trägkeit und aufgrund der Tatsache, daß sie mit dem Dosierkopf nicht starr verbunden ist, dieser Bewegung nicht folgen. Sie verläßt die Düse entgegengesetzt zur Richtung der Bewegung des Dosierkopfes, die durch die Beschleunigung von dem Substrat weg bewirkt wird, und steht zunächst frei im Raum, bevor die Tropfen aufgrund der Schwerkraft auf das Substrat fallen. Hierbei kann eine Vorrichtung vorgesehen sein, um ein elektrostatisches Feld zwischen Dosierkopf und Substrat zu erzeugen, um dadurch das Aufbringen der Tröpfchen auf das Substrat zu unterstützen.

In beiden oben genannten Fällen ist es günstig, wenn die Beschleunigung des Dosierkopfes in einer Position geschieht, in der der Abstand zwischen den Düsen in dem Dosierkopf und dem Substrat sehr gering ist. Dann ist gewährleistet, daß, wenn sich beim Ablösen der Mikrotropfen jeweils Satellitentropfen bilden, diese sich spätestens auf dem Substrat mit dem Muttertropfen vereinigen. Durch den geringen Abstand ist sichergestellt, daß die Satellitentropfen auch dann auf dem Muttertropfen landen, wenn sie die Düse unter einem etwas anderen Winkel verlassen haben.

Die vorliegende Erfindung schafft somit Vorrichtungen und Verfahren, durch die Mikrotröpfchen, insbesondere von biologisch relevanten Stoffen, erzeugt und in einem regelmäßigen Muster auf ein Substrat aufgebracht werden können.

Bevorzugte Ausführungsbeispiele der vorliegenden Erfindung werden nachfolgend bezugnehmend auf die beiliegenden Zeichnungen näher erläutert. Es zeigen:
- Fig. 1: schematisch ein bevorzugtes Ausführungsbeispiel einer erfindungsgemäßen Vorrichtung zum Aufbringen von Mikrotröpfchen auf ein Substrat;
- Fig. 2: schematisch eine Querschnittansicht eines Ausführungsbeispiels eines erfindungsgemäßen Dosierkopfes;
- Fig. 3: schematisch eine Unteransicht des in Fig. 2 gezeigten Dosierkopfes;
- Fig. 4: schematisch eine Draufsicht des in Fig. 2 gezeigten Dosierkopfes; und
- Fig. 5, 6, 7a) und 7b): schematisch Querschnittansichten alternativer Ausführungsbeispiele von erfindungsgemäßen Dosierköpfen.

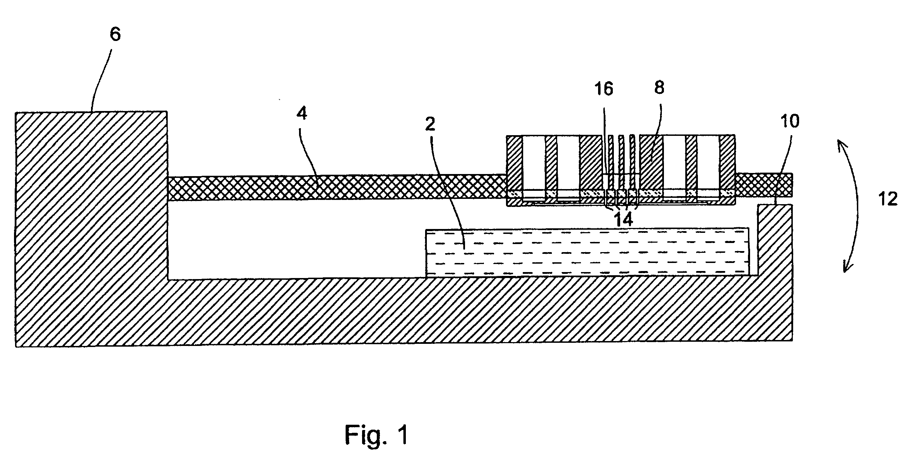

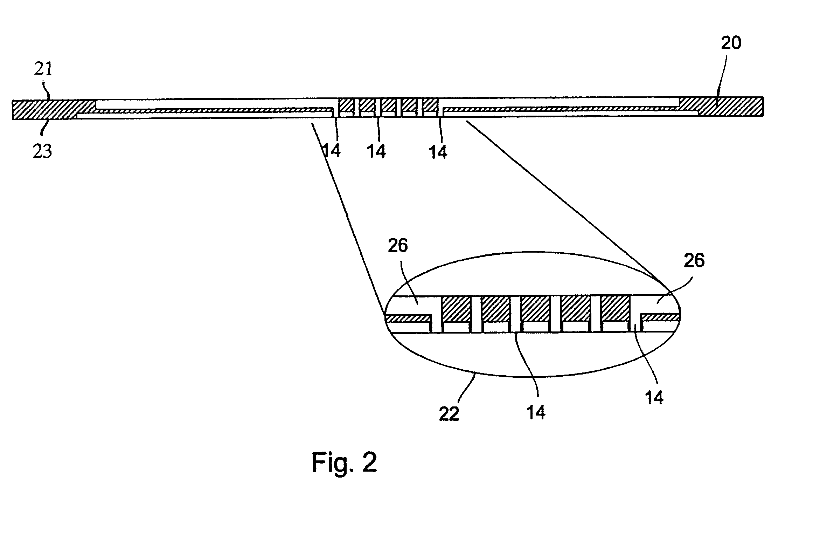

In Fig. 1 ist eine schematische Querschnittansicht eines bevorzugten Ausführungsbeispiels einer erfindungsgemäßen Vorrichtung zum Aufbringen von Mikrotröpfchen auf ein Substrat 2 dargestellt. Wie in Fig. 1 gezeigt ist, ist ein Piezo-Biegewandler 4 einseitig an einer Halterung 6 eingespannt, wobei an dem nicht eingespannten Ende des Piezo-Biegewandlers 4 ein Dosierkopf 8 angebracht ist. Bevorzugte Ausführungsbeispiele des Dosierkopfes 8 werden später bezugnehmend auf die Fig. 2 bis 7 näher erläutert. Wie ferner in Fig. 1 zu sehen ist, ist die Halterung 6 derart ausgestaltet, daß dieselbe einen Anschlag 10 bildet, durch den eine Bewegung des Piezo-Biegewandlers 4 und somit des Dosierkopfes 8, die schematisch durch den Pfeil 12 gezeigt ist, bei der Darstellung von Fig. 1 nach unten begrenzt ist. Der Dosierkopf 8 weist eine Mehrzahl von Düsenöffnungen 14 auf, über denen jeweils eine Flüssigkeitsmenge angeordnet ist, wie durch das Bezugszeichen 16 schematisch angezeigt ist und im weiteren detaillierter erläutert wird.

Im Betrieb wird nun der Piezo-Biegewandler 4 angetrieben, um den Dosierkopf 8 nach unten zu bewegen. Diese Bewegung wird abrupt beendet, wenn das rechte Ende des Piezo-Biegewandlers auf den Anschlag 10 trifft, so daß der Dosierkopf 8 mit einer starken negativen Beschleunigung beaufschlagt wird. Durch diese starke negative Beschleunigung bewirkt die Trägheit der oberhalb der Düsenöffnungen 14 angeordneten Flüssigkeitsmengen 16, daß ein Mikrotröpfchen aus den Düsenöffnungen 14 getrieben wird und auf das Substrat 2 trifft. Handelt es sich dabei jeweils um unterschiedliche Flüssigkeiten, kann dadurch mittels der Mehrzahl von Düsenöffnungen 14 ein Array von Analyten auf dem Substrat 2 erzeugt werden. Wie in Fig. 1 schematisch gezeigt ist, ist es vorteilhaft, daß der Dosierkopf 8 zu dem Zeitpunkt, zu dem derselbe mit der negativen Beschleunigung beaufschlagt wird, unmittelbar benachbart zu dem Substrat angeordnet ist, um ein exaktes Positionieren der Mikrotröpfchen auf dem Substrat 2 zu ermöglichen und ferner zu bewirken, daß mögliche Satellitentröpfchenanteile sich mit dem Muttertröpfchen vereinigen.

Das tatsächliche Profil der Beschleunigung, mit der der Dosierkopf beaufschlagt wird, kann über die Flankensteilheit des Spannungssignals, mit dem der Biegewandler angetrieben wird, variiert werden. Die Amplitude der Bewegung kann einfach über die Länge des Piezo-Biegewandlers oder die Amplitude des Spannungssignals angepaßt werden, wobei, wie in Fig. 1 gezeigt ist, ein Anschlag 10 vorgesehen sein kann, um das abrupte Abbremsen des Dosierkopfes zu unterstützen. Alternativ kann es ausreichend sein, ein schlagartiges Abbremsen des Dosierkopfes über ein elektrisches Steuersignal mit hoher Flankensteilheit zu bewirken.

Neben dem in Fig. 1 dargestellten Piezo-Biegewandler kann als Antriebseinrichtung zur schlagartigen Beschleunigung des Dosierkopfes beispielsweise ein Piezo-Stapelaktor verwendet werden. In diesem Fall empfiehlt es sich jedoch, die Weglänge des Aktors, die typischerweise zwischen 20 µm und 100 µm liegt, durch einen mechanischen Hebel zu vergrößern. Insgesamt ist es vorteilhaft, wenn die gesamte Strecke, um die der Dosierkopf bewegt wird, größer ist als der Durchmesser des Tropfens, der aus der Düse herausgeschleudert werden soll. Bei sehr kleinen Bewegungen besteht sonst die Gefahr, daß ein Tropfen, der sich bereits außerhalb der Düse befindet, wieder in die Düse zurückgezogen wird, bevor er vollständig abreißen kann. Überdies kann es vorteilhaft sein, den Dosierkopf nach dem schlagartigen Abbremsen, nachdem sich derselbe auf das Substrat zubewegt hat, wieder mit hoher Geschwindigkeit von dem Substrat wegzubewegen, um dadurch das Abreißen des Tropfens vorteilhaft zu beeinflussen.

Insgesamt ist es vorteilhaft, den Dosierkopf 8 und die mechanische Antriebsvorrichtung, die bei dem Ausführungsbeispiel in Fig. 1 durch den Piezo-Biegewandler 4 und die Halterung 6 gebildet ist, modular auszulegen, so daß der Dosierkopf einfach ausgetauscht werden kann.

Bezugnehmend auf die Fig. 2 bis 7 werden nachfolgend Ausführungsbeispiele des erfindungsgemäßen Dosierkopfes näher erläutert. Bei dem Dosierkopf kann es sich beispielsweise um einen Chip handeln, der mit den Verfahren der Silizium-Mikromechanik hergestellt ist. Der Dosierkopf kann ferner aus einem Siliziumglasverbund, einem Metall oder einer Keramik bestehen. Alternativ kann der Dosierkopf mittels einer Spritzgußtechnik aus einem Kunststoff oder einem Polymer gebildet sein.

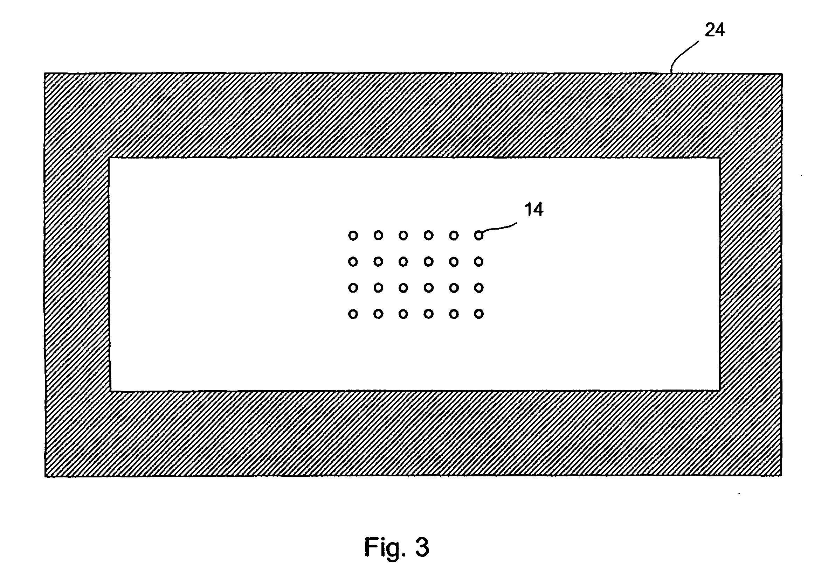

Eine schematische Querschnittansicht eines solchen Chips ist in Fig. 2 gezeigt und mit dem Bezugszeichen 20 bezeichnet, wobei Fig. 2 ferner eine vergrößerte Ansicht 22 des Bereichs, in dem die Düsenöffnungen 14 angeordnet sind, enthält. Der Chip bzw. das Substrat 20 besitzt eine erste Oberfläche 21 und eine zweite Oberfläche 23. Die Düsen 14 sind in der zweiten Oberfläche 23, d.h. gemäß den Zeichnungen in der Unterseite, des Chips 20 mikrostrukturiert und gegenüber der umgebenden Siliziumoberfläche exponiert. In Fig. 2 sind sechs nebeneinander angeordnete Düsen 14 dargestellt, wobei eine Unteransicht des Chips mit den in der Unterseite desselben strukturierten Düsen 14 in Fig. 3 gezeigt ist, wobei zu sehen ist, daß das dargestellte Ausführungsbeispiel eines Dosierkopfes vierundzwanzig Düsen enthält. Wie ebenfalls zu erkennen ist, sind die Düsen gegenüber der umgebenden Siliziumoberfläche exponiert, wobei der Dosierkopf in der Unteransicht desselben von einer Umrandung 24 umgeben ist. Die Düsen 14 sind bei dem dargestellten Ausführungsbeispiel über Medienleitungen 26, wobei in Fig. 2 lediglich zwei Medienleitungen für die äußersten Düsen dargestellt sind, mit Medienreservoirs verbunden, die beispielsweise ebenfalls auf dem Chip integriert sein können.

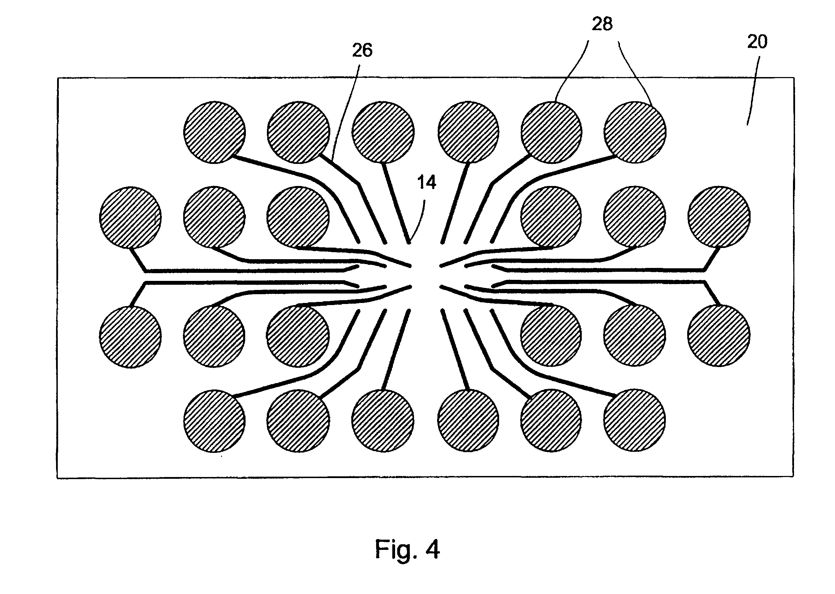

Eine schematische Draufsicht des in Fig. 2 gezeigten Dosierkopfes 20 ist in Fig. 4 dargestellt, wobei vierundzwanzig, in der ersten Oberfläche 21 (Fig. 2) des Chips gebildete Medienreservoirs 28, die über Medienleitungen 26 mit jeweiligen Düsen 14 verbunden sind, dargestellt sind. Die Medienreservoirs 28 sind bei dem dargestellten Ausführungsbeispiel in der den Düsen 14 gegenüberliegenden Oberfläche des Chips, der den Dosierkopf bildet, strukturiert. Die Medienreservoirs 28 werden vorzugsweise so ausgelegt, daß sie mit Standard-Pipettierautomaten automatisiert mit Flüssigkeiten gefüllt werden können. Dazu können dieselben beispielsweise identische Durchmesser und Abstände besitzen wie die Kammern einer bekannten 348-Well-Mikrotiterplatte. Die Flüssigkeit aus den Medienreservoiren 28 wird vorzugsweise durch Kapillarkräfte über die Medienleitungen 26 zu den Düsen 14 gezogen. Die Medienleitungen 26 dienen dabei dazu, die eng beieinanderliegenden Düsen 14 mit Flüssigkeit aus einem größeren Reservoir 28 zu versorgen. Die Befüllung der Struktur kann durch eine aktive Steuerung, beispielsweise das Anlegen eines externen Drucks, unterstützt werden.

Die bezugnehmend auf die Fig. 2 bis 4 beschriebenen Düsen können beispielsweise einen Durchmesser von 200 µm aufweisen, wobei die Medienleitungen 26 ebenfalls eine Breite von 200 µm aufweisen können. Somit lassen sich bequem vierundzwanzig Düsen in einem Array aus sechs mal vier Düsen, wie in Fig. 3 zu sehen ist, im gegenseitigen Abstand von 1 mm anordnen. Der limitierende Faktor für die Anzahl der Düsen, die sich in einem Array anordnen lassen, ist die Breite der Verbindungskanäle, welche die Düsen mit den Reservoirs verbinden. Diese Verbindungskanäle müssen zwischen den Düsen nach außen geführt werden. Bei einer Reduzierung der Breite dieser Kanäle lassen sich auch 48, 96 oder mehr Düsen auf einem Dosierkopf unterbringen.

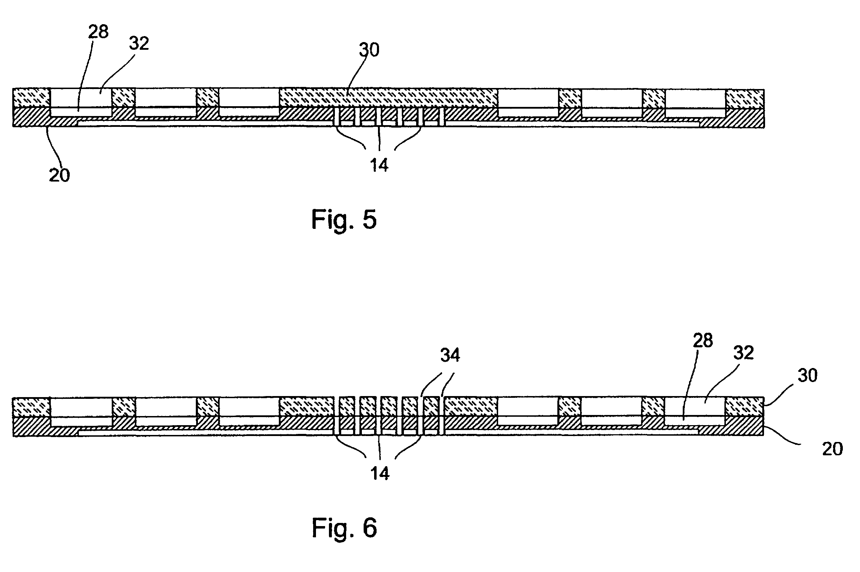

Um zu vermeiden, daß sich die Flüssigkeiten aus verschiedenen Medienleitungen im Bereich der Düsen untereinander vermischen, kann die Oberseite des Chips entweder mit einer hydrophoben Schicht (nicht dargestellt), mit einer Folie oder einem auf die Oberseite des Chips gebondeten weiteren Siliziumchip oder Glas-Chip bedeckt sein. Ein solcher Deckelchip 30 ist in Fig. 5 gezeigt, wobei zu erkennen ist, daß der Deckelchip 30 Öffnungen 32 besitzt, die eine Befüllung der Medienreservoirs 28 ermöglichen. Es kann bevorzugt sein, als Deckelschicht 30 eine elastische Folie zu verwenden, die aufgrund ihrer Nachgiebigkeit Vorteile gegenüber einer starren Abdeckplatte haben kann.

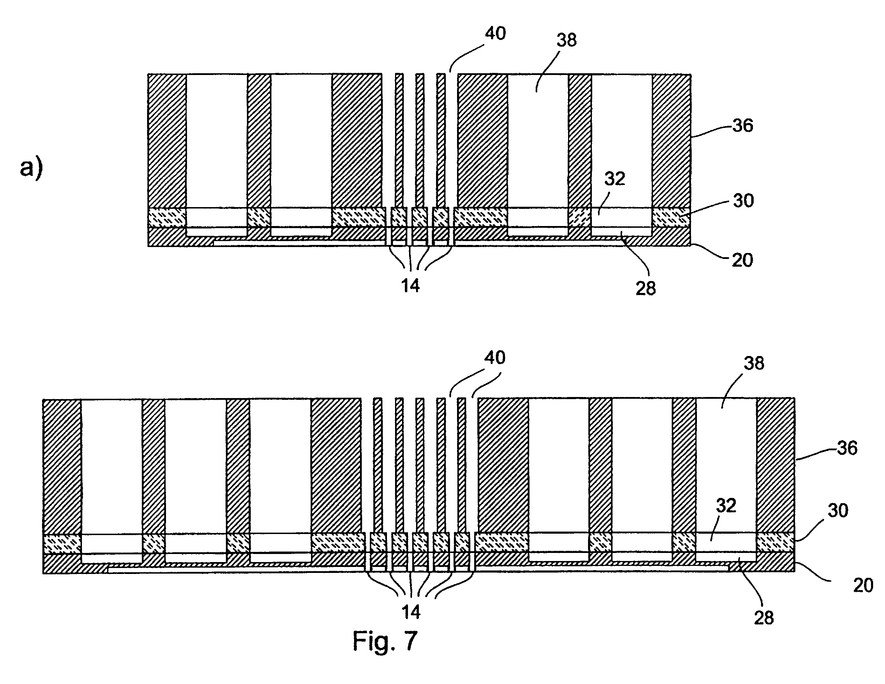

Bei den bezugnehmend auf die Fig. 2 bis 5 beschriebenen Ausführungsbeispielen eines Dosierkopfes kann die Dosierqualität von den Strömungswiderständen der Flüssigkeit in den Medienleitungen abhängen. Es kann daher bevorzugt sein, bei dem erfindungsgemäßen Dosierkopf die direkt über der Düse stehende Flüssigkeitsmasse zu vergrößern, um zu erreichen, daß die Dosierqualität unabhängig von den Strömungswiderständen der Medienleitungen wird. Ausführungsbeispiele von Dosierköpfen, bei denen eine solche Vergrößerung der Flüssigkeitsmasse oberhalb der Düsen realisiert ist, sind in den Fig. 6 und 7 gezeigt. Wie in Fig. 6 zu sehen ist, ist über den Düsen 14 jeweils eine axiale Steigleitung 34 angeordnet, die sich entgegengesetzt zu der Ausstoßrichtung erstreckt. Diese Steigleitungen können über eine T-förmige Verbindung (nicht dargestellt) nahe der Düse an die Medienleitungen angebunden sein, die sich unverändert an der Oberseite des Chips befinden. Die Steigleitungen 34 befüllen sich mit Flüssigkeit aus den Medienleitungen allein aufgrund von Kapillarkräften. Es sei angemerkt, daß die Medienleitungen aus Gründen der Übersichtlichkeit in den Querschnittansichten der Fig. 5 bis 7 nicht dargestellt sind.

In den Fig. 7a) und 7b) sind zwei Schnittansichten des Dosierkopfes 8, der bei der Vorrichtung, die in Fig. 1 gezeigt ist, verwendet ist, dargestellt, wobei der Schnitt in Fig. 7a) entlang der Querrichtung vier Düsen 14 zeigt, während der Schnitt in Fig. 7b) entlang der Längsrichtung sechs Düsen 14 zeigt, so daß sich wiederum eine Gesamtzahl von vierundzwanzig Düsen ergibt. Wie in den Fig. 7a) und 7b) zu erkennen ist, ist bei dem dargestellten Ausführungsbeispiel über der Deckelschicht 30 eine weitere Schicht 36 angeordnet, die zum einen vergrößerte Medienreservoirs 38 und zum anderen vergrößerte Steigleitungen 40 liefert. Auch diese Steigleitungen 40 befüllen sich mit Flüssigkeit aus den Medienleitungen (nicht dargestellt) allein aufgrund von Kapillarkräften.

Es ist anzumerken, daß auf die angeschlossenen Medienreservoire sowie die Medienleitungen verzichtet werden kann, wenn die Steigleitungen oder der Düsenbereich direkt durch konventionelle Verfahren, beispielsweise durch Pipettierautomaten oder Mikrodispenser usw. mit Flüssigkeit aufgefüllt werden können. Sofern dies aufgrund der räumlich engen Anordnung nicht möglich ist, sind die größeren außenliegenden Reservoire nützlich, da sie sehr bequem mit Standard-Pipettierautomaten befüllt werden können und sich die Steigleitungen automatisch über Kapillarkräfte befüllen.

Die nach oben offenen Steigleitungen 34 bzw. 40 bewirken, daß die direkt über der Düse stehende Flüssigkeitsmasse vergrößert ist. Die in den Steigleitungen befindliche Flüssigkeit wird anders als die Flüssigkeit in den Medienleitungen 26 bzw. die Flüssigkeit in den Reservoiren 28 direkt in Richtung Düse beschleunigt und ist über einen minimalen Strömungswiderstand an diese angekoppelt. Wird der Dosierkopf beispielsweise aus einer Bewegung nach unten schlagartig abgebremst, beispielsweise durch den in Fig. 1 gezeigten Anschlag 10, so wird die Flüssigkeit aus den Steigleitungen 34 bzw. 40 direkt in Richtung Düsenausgang beschleunigt, wohingegen die in den Reservoiren 28 befindliche Flüssigkeit erst über die Medienleitungen 26 quer zur Beschleunigungsrichtung fließen muß. Dabei muß die Flüssigkeit einen sehr viel größeren Strömungswiderstand überwinden.

Wie bereits oben ausgeführt wurde, sind die Steigleitungen 34 bzw. 40 derart ausgeführt, daß sie aufgrund von Kapillarkräften stets mit Flüssigkeit befüllt sind. Neben den beschriebenen Ausführungsbeispielen, bei denen jede Düse einen eigenen Flüssigkeitsspeicherbereich aufweist, können auch mehrere Düsen eine Düsengruppe bilden und über eine gemeinsame Medienleitung mit derselben Flüssigkeit versorgt werden. Ferner ist es möglich, mehrere Abdeckplatten übereinander zu montieren, um die Packungsdichte der Düsen zu erhöhen, da dann das System der Medienleitungen auf mehrere Ebenen verteilt werden kann. Indem Leitungen auf verschiedenen Ebenen geführt werden, können sich diese auch scheinbar kreuzen, ohne daß eine Vermischung der verschiedenen Flüssigkeiten in den jeweiligen Leitungen stattfindet.

## Patentansprüche

1. Vorrichtung zum Aufbringen zumindest eines Mikrotröpfchens auf ein Substrat (2) mit folgenden Merkmalen:
einem Dosierkopf (8) mit einem Dosierkopfkörper (20, 30, 36), der zumindest eine Düsenöffnung (14) und einen Flüssigkeitsspeicherbereich, der mit der Düsenöffnung fluidmäßig verbunden ist, aufweist; und
einer Antriebseinrichtung (4) zum Beaufschlagen des Dosierkopfes (8) mit einer solchen Beschleunigung, daß allein dadurch, daß eine in dem Flüssigkeitsspeicherbereich befindliche Flüssigkeitsmenge (16) der Beschleunigung trägheitsbedingt nicht folgt, ein Mikrotröpfchen aus der Düsenöffnung (14) auf das Substrat (2) getrieben wird.

2. Vorrichtung nach Anspruch 1, bei der die Antriebseinrichtung (4) ausgelegt ist, um den Dosierkopf (8) benachbart zu dem Substrat (2) aus einer Bewegung zu dem Substrat (2) hin mit einer negativen Beschleunigung zu beaufschlagen.

3. Vorrichtung nach Anspruch 1, bei der die Antriebseinrichtung (4) ausgelegt ist, um den Dosierkopf (8) aus einer Position benachbart zu dem Substrat mit einer Beschleunigung von dem Substrat weg zu beaufschlagen.

4. Vorrichtung nach Anspruch 1, bei der die Antriebseinrichtung ausgelegt ist, um den Dosierkopf mit einer Schwingung zu beaufschlagen, derart, daß der Dosierkopf im Umkehrpunkt der Schwingung benachbart zu dem Substrat angeordnet ist.

5. Vorrichtung nach Anspruch 1, bei der die Antriebseinrichtung ein einseitig eingespannter Piezo-Biegewandler (4) ist, an dem der Dosierkopf (8) derart angebracht ist, daß eine Beschleunigung des Dosierkopfes (8) zum Substrat (2) hin bewirkbar ist, wobei ferner ein mechanischer Anschlag (10) vorgesehen ist, durch den der Dosierkopf (8) benachbart zu dem Substrat (2) abrupt abbremsbar ist.

6. Vorrichtung nach einem der Ansprüche 1 bis 5, die ferner eine Einrichtung zum Erzeugen eines elektrostatischen Feldes zwischen dem Dosierkopf und dem Substrat aufweist.

7. Vorrichtung nach einem der Ansprüche 1 bis 6, bei der der Dosierkopf (8) eine Mehrzahl von in einem ersten Muster in einer ersten Oberfläche (21) desselben angeordneten Fluideingängen (28) und eine Mehrzahl von in einem zweiten Muster in einer zweiten Oberfläche (23) desselben angeordneten Düsenöffnungen (14) aufweist, wobei die Fluideingänge (28) mittels Fluidleitungen (26) mit jeweiligen der Düsenöffnungen (14) verbunden sind, wobei sich das erste und das zweite Muster unterscheiden, derart, daß zwischen Fluideingängen (28) und Düsenöffnungen (14) eine Formatumwandlung stattfindet.

8. Vorrichtung nach einem der Ansprüche 1 bis 7, bei der der Flüssigkeitsspeicherbereich durch eine Steigleitung (34; 40) gebildet ist, die sich in einer Richtung, die entgegengesetzt zu der Richtung, in der das Mikrotröpfchen aus dem Dosierkopf (8) treibbar ist, ist, von der Düsenöffnung (14) weg erstreckt.

9. Vorrichtung nach einem der Ansprüche 1 bis 8, bei der eine Mehrzahl von Düsenöffnungen (14) in einer Oberfläche des Dosierkopfkörpers (20; 30; 36) mit jeweils zugeordneten Flüssigkeitsspeicherbereichen gebildet ist.

10. Vorrichtung nach einem der Ansprüche 1 bis 9, bei der in dem Dosierkopfkörper (20; 30; 36) für eine oder mehrere Düsenöffnungen (14) ein Medienreservoir (28) vorgesehen ist, das über einen Verbindungskanal (26) mit dem Flüssigkeitsspeicherbereich der jeweiligen Düsenöffnung fluidmäßig verbunden ist.

11. Vorrichtung nach Anspruch 10, bei der der Verbindungskanal (26) derart ausgestaltet ist, daß der damit verbundene Flüssigkeitsspeicherbereich durch eine Kapillarwirkung mit Flüssigkeit aus dem Medienreservoir (28) befüllbar ist.

12. Verfahren zum Aufbringen zumindest eines Mikrotröpfchens auf ein Substrat (2) mit folgenden Schritten:
a) Befüllen eines mit einer Düsenöffnung (14) fluidmäßig verbundenen Flüssigkeitsspeicherbereichs mit einer Flüssigkeitsmenge, wobei die Düsenöffnung (14) und der Flüssigkeitsspeicherbereich in einem Dosierkopf (8) gebildet sind; und
b) Beaufschlagen des Dosierkopfes (8) mit einer solchen Beschleunigung, daß allein dadurch, daß die in dem Flüssigkeitsspeicherbereich befindliche Flüssigkeitsmenge der Beschleunigung trägheitsbedingt nicht folgt, ein Mikrotröpfchen aus der Düsenöffnung (14) getrieben wird.

13. Verfahren nach Anspruch 12, bei dem im Schritt b) der Dosierkopf (8) aus einer Bewegung zu dem Substrat (2) hin abrupt abgebremst wird.

14. Verfahren nach Anspruch 12, bei dem im Schritt b) der Dosierkopf aus einer Position benachbart zu dem Substrat (2) mit einer Beschleunigung, um eine Bewegung von dem Substrat (2) weg zu bewirken, beaufschlagt wird.

15. Verfahren nach Anspruch 12, bei dem der Dosierkopf (8) im Schritt b) mit der Beschleunigung beaufschlagt wird, indem der Dosierkopf (8) einer Schwingung unterworfen wird.

16. Verfahren nach einem der Ansprüche 12 bis 15, bei dem der Schritt a) für eine Mehrzahl von Düsenöffnungen (14), die in einem Dosierkopf angeordnet sind, durchgeführt wird, wobei die den Düsenöffnungen (14) zugeordneten Flüssigkeitsspeicherbereiche mit unterschiedlichen Analyten befüllt werden, derart, daß im Schritt b) ein Array von unterschiedlichen Analyten auf dem Substrat (2) erzeugt wird.

## Claims

1. Device for applying at least one microdroplet to a substrate (2), comprising:
a dosing head (8) with a dosing head body (20, 30, 36) comprising at least one nozzle orifice (14) and a liquid storage area which is in fluid communication with the nozzle orifice; and
a drive means (4) for applying to the dosing head (8) an acceleration of such a nature that a microdroplet is driven out of the nozzle orifice (14) and onto the substrate (2) due to the mere fact that an amount of liquid (16) contained in the liquid storage area does not follow the acceleration due to inertia.

2. Device according to claim 1, wherein the drive means (4) is adapted to apply to the dosing head (8) a negative acceleration adjacent the substrate (2) out of a movement towards said substrate (2).

3. Device according to claim 1, wherein the drive means (4) is adapted to apply to the dosing head (8) an acceleration away from the substrate when said dosing head occupies a position adjacent said substrate.

4. Device according to claim 1, wherein the drive means is implemented such that it is adapted to apply to the dosing head an oscillation in such a way that the dosing head is arranged adjacent the substrate at the point of reversal of the oscillation.

5. Device according to claim 1, wherein the drive means is a piezo-bending transducer (4) which is fixed at one end thereof and which has the dosing head (8) attached thereto in such a way that an acceleration of said dosing head (8) towards the substrate (2) can be effected, a mechanical stop (10) being additionally provided by means of which the dosing head (8) can be decelerated abruptly adjacent the substrate (2).

6. Device according to any one of claims 1 to 5, said device further comprising a means for producing an electrostatic field between the dosing head and the substrate.

7. Device according to any one of claims 1 to 6, wherein the dosing head (8) comprises a plurality of fluid inputs (28) arranged in a first pattern in a first surface (21) of said dosing head (8), and a plurality of nozzle orifices (14) arranged in a second pattern in a second surface (23) of said dosing head (8), the fluid inputs (28) being connected to respective ones of the nozzle orifices (14) by means of fluid lines (26), the first and second patterns being different from each other, such that a format conversion takes place between fluid inputs (28) and nozzle orifices (14).

8. Device according to any one of claims 1 to 7, wherein the liquid storage area is formed by a standpipe (34; 40) extending away from the nozzle orifice (14) in a direction opposite to the direction in which the microdroplet can be driven out of the dosing head (8).

9. Device according to any one of claims 1 to 8, wherein a plurality of nozzle orifices (14) is formed in a surface of the dosing head body (20; 30; 36), each of said nozzle orifices having liquid storage areas associated therewith.

10. Device according to any one of claims 1 to 9, wherein a media reservoir (28) for one or for a plurality of nozzle orifices (14) is provided in the dosing head body (20; 30; 36), said media reservoir (28) being in fluid communication with the liquid storage area of the respective nozzle orifice via a connection passage (26).

11. Device according to claim 10, wherein the connection passage (26) is implemented such that the liquid storage area connected thereto can be filled with liquid from the media reservoir (28) due to a capillary effect.

12. Method of applying at least one microdroplet to a substrate (2), said method comprising the following steps:
a) filling a liquid storage area, which is in fluid communication with a nozzle orifice (14), with an amount of liquid, said nozzle orifice (14) and said liquid storage area being formed in a dosing head (8); and
b) applying to said dosing head (8) an acceleration of such a nature that a microdroplet is driven out of the nozzle orifice (14) due to the mere fact that the amount of liquid contained in the liquid storage area does not follow the acceleration due to inertia.

13. Method according to claim 12, wherein, in step b), the dosing head (8) is decelerated abruptly while carrying out a movement towards the substrate (2).

14. Method according to claim 12, wherein, in step b), the dosing head, which occupies a position adjacent the substrate (2) at that time, has applied thereto an acceleration so as to cause a movement away from said substrate (2).

15. Method according to claim 12, wherein, in step b), the dosing head (8) has applied thereto the acceleration by subjecting said dosing head (8) to an oscillation.

16. Method according to any one of claims 12 to 15, wherein step a) is carried out for a plurality of nozzle orifices (14) which are arranged in a dosing head, the liquid storage areas associated with the nozzle orifices (14) being filled with different analytes in such a way that an array of different analytes is produced on the substrate (2) in step b).

## Revendications

1. Dispositif pour appliquer au moins une microgouttelette sur un substrat (2), avec les caractéristiques suivantes :
une tête de dosage (8) avec un corps de tête de dosage (20, 30, 36) présentant au moins une ouverture de buse (14) et une zone de stockage de liquide qui est en communication fluidique avec l'ouverture de buse ; et
un dispositif d'entraînement (4) pour appliquer sur la tête de dosage (8) une telle accélération que par le seul fait qu'une quantité de liquide (16) se trouvant dans la zone de stockage de liquide ne suit pas l'accélération pour des raisons d'inertie, une microgouttelette est éjectée de l'ouverture de buse (14) sur le substrat (2).

2. Dispositif selon la revendication 1, dans lequel le dispositif d'entraînement (4) est conçu pour appliquer à la tête de dosage (8) à proximité du substrat (2) une accélération négative depuis un mouvement vers le substrat (2).

3. Dispositif selon la revendication 1, dans lequel le dispositif d'entraînement (4) est conçu pour appliquer à la tête de dosage (8) une accélération l'éloignant du substrat depuis une position à proximité du substrat.

4. Dispositif selon la revendication 1, dans lequel le dispositif d'entraînement est conçu pour appliquer à la tête de dosage une oscillation telle que la tête de dosage, au point de renvoi de l'oscillation, soit disposée à proximité du substrat.

5. Dispositif selon la revendication 1, dans lequel le dispositif d'entraînement est un piézo-convertisseur à flexion (4) unilatéralement enserré, sur lequel est montée la tête de dosage de telle sorte qu'une accélération de la tête de dosage (8) vers le substrat (2) peut être obtenue, une butée mécanique (10) étant en outre prévue permettant de freiner subitement la tête de dosage (8) à proximité du substrat (2).

6. Dispositif selon l'une quelconque des revendications 1 à 5, qui présente en outre un dispositif pour générer un champ électrostatique entre la tête de dosage et le substrat.

7. Dispositif selon l'une quelconque des revendications 1 à 6, dans lequel la tête de dosage (8) présente une pluralité d'entrées de fluide (28) disposées dans un premier motif dans une première surface (21) de celui-ci, et une pluralité d'entrées de buse (14) disposées dans un deuxième motif dans une deuxième surface (23) de celui-ci, les entrées de fluide (28) étant reliées aux ouvertures de buses (14) respectives à l'aide de conduites de fluide (26), le premier et le deuxième motifs se distinguant de telle sorte qu'entre les entrées de fluide (28) et les ouvertures de buses (14) il se produit un changement de format.

8. Dispositif selon l'une quelconque des revendications 1 à 7, dans lequel la zone de stockage de liquide est constituée par une conduite ascendante (34 ; 40), qui s'étend depuis l'ouverture de buse (14) dans un sens opposé au sens dans lequel la microgouttelette peut être éjectée de la tête de dosage (8).

9. Dispositif selon l'une quelconque des revendications 1 à 8, dans lequel une pluralité d'ouvertures de buses (14) sont formées dans une surface du corps de tête de dosage (20 ; 30 ; 36) présentant respectivement des zones de réservoir de liquide associées.

10. Dispositif selon l'une quelconque des revendications 1 à 9, dans lequel dans le corps de tête de dosage (20 ; 30 ; 36) un réservoir de fluide (28) est prévu pour une ou plusieurs ouvertures de buses (14), qui est en communication fluidique avec la zone de stockage de liquide de l'ouverture de buse respective par l'intermédiaire d'un canal de liaison (26).

11. Dispositif selon la revendication 10, dans lequel le canal de liaison (26) est configuré tel que la zone de stockage de liquide reliée à celui-ci peut être remplie par un effet capillaire avec du liquide provenant du réservoir de fluide (28).

12. Procédé pour appliquer au moins une microgouttelette sur un substrat (2) comprenant les étapes suivantes :
a) remplissage d'une zone de stockage de liquide en communication fluidique avec une ouverture de buse (14) avec une quantité de liquide, l'ouverture de buse (14) et la zone de stockage de liquide étant configurées dans une tête de dosage (8) ; et
b) application sur la tête de dosage (8) d'une telle accélération que par le seul fait qu'une quantité de liquide se trouvant dans la zone de stockage de liquide ne suit pas l'accélération pour des raisons d'inertie, une microgouttelette est éjectée de l'ouverture de buse (14).

13. Procédé selon la revendication 12, dans lequel dans l'étape b) la tête de dosage (8) est subitement freinée pendant un mouvement vers le substrat (2).

14. Procédé selon la revendication 12, dans lequel dans l'étape b) une accélération est appliquée sur la tête de dosage, depuis une position à proximité du substrat (2), pour obtenir un mouvement l'éloignant du substrat (2).

15. Procédé selon la revendication 12, dans lequel dans l'étape b) l'accélération est appliquée sur la tête de dosage (8) en soumettant la tête de dosage (8) à une oscillation.

16. Procédé selon l'une quelconque des revendications 12 à 15, dans lequel l'étape a) est réalisée pour une pluralité d'ouvertures de buses (14), disposées dans une tête de dosage, les zones de stockage de liquide associées aux ouvertures de buses (14) étant remplies de différents analytes de telle sorte que dans l'étape b) est réalisé un array de différents analytes sur le substrat (2).
